(19) Europäisches Patentamt
European Patent Office
Office européen des brevets

(11) EP 1 222 231 B1

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(21) Anmeldenummer: **00960687.2**

(22) Anmeldetag: **21.09.2000**

(51) Int Cl.[7]: **C08L 69/00**, B29B 7/00, B29B 7/30

(86) Internationale Anmeldenummer:
**PCT/EP2000/009247**

(87) Internationale Veröffentlichungsnummer:
**WO 2001/025333 (12.04.2001 Gazette 2001/15)**

(54) **VERFAHREN UND VORRICHTUNG ZUM KONTINUIERLICHEN HERSTELLEN EINES THERMOPLASTISCHEN POLYMERBLENDS UND DESSEN VERWENDUNG**

METHOD AND DEVICE FOR THE CONTINUOUS PRODUCTION OF A THERMOPLASTIC POLYMER BLEND AND THE USE THEREOF

PROCEDE ET DISPOSITIF DE PREPARATION EN CONTINU D'UN MELANGE POLYMERE THERMOPLASTIQUE ET SON UTILISATION

(84) Benannte Vertragsstaaten:
**AT BE CH CY DE DK ES FI FR GB GR IE IT LI LU MC NL PT SE**

(30) Priorität: **04.10.1999 DE 19947630**

(43) Veröffentlichungstag der Anmeldung:
**17.07.2002 Patentblatt 2002/29**

(73) Patentinhaber: **Bayer MaterialScience AG**
**51368 Leverkusen (DE)**

(72) Erfinder:
- **BIENMÜLLER, Matthias**
**47803 Krefeld (DE)**
- **DIETRICH, Hans-Jürgen**
**60599 Frankfurt (DE)**
- **IDEL, Karsten-Josef**
**47802 Krefeld (DE)**
- **KOHLGRÜBER, Klemens**
**51515 Kürten (DE)**
- **WEYRICH, Frank**
**42781 Haan (DE)**
- **KARBACH, Alexander**
**47800 Krefeld (DE)**
- **ELSNER, Thomas**
**40595 Düsseldorf (DE)**
- **HEUSER, Jürgen**
**47803 Krefeld (DE)**
- **KORDS, Christian**
**47829 Krefeld (DE)**

(56) Entgegenhaltungen:
**EP-A- 0 340 655**
**US-A- 5 225 488**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

EP 1 222 231 B1

## Beschreibung

Die Erfindung betrifft ein Verfahren und eine Vorrichtung zum Herstellen eines thermoplastischen Polymerblends aus Polycarbonat, einem thermoplastischen Polyester und/oder Vinylpolymerisaten sowie ggf. weiteren Zusätzen und die Verwendung eines solchen Polymerblends.

Die Herstellung thermoplastischer Polymerblends ist in verschiedensten Ausführungen bekannt. Dies geschieht durch Aufschmelzen und anschließendes Vermischen der Blendpartner mit Hilfe von beispielsweise Schneckenaggregaten oder Knetaggregaten (beispielsweise Compoundierung mittels Extrudern oder Spritzgießmaschinen). Die Ausgangsthermoplaste des Blends liegen dabei vor dem Aufschmelzen als Feststoffe, beispielsweise in Form von Granulaten oder Pulvern, vor. Im Vermischungsschritt werden neben den Thermoplast-Blendpartnern häufig auch noch weitere Zusätze hinzugefügt. So beschreibt die WO 92/19676 ein Verfahren zum Herstellen von Polymerblends, wobei beide zu vermischenden Polymere zunächst aufgeschmolzen werden und dann beide Polymerströme miteinander vermischt werden. Bei dieser bekannten Blendherstellung wird bei der Vermischung eine kontinuierliche faserförmige Morphologie ausgebildet, die eine Verstärkung des Polymerblends bewirkt. Das Polymer, das zur Ausbildung der Fasern befähigt ist, stammt aus dem Bereich der flüssigkristallinen Thermoplaste (LCP). Ein anderes Verfahren ist in der US-A 4,547,541 beschrieben. Auch dort werden zwei verschiedene Polymere zunächst getrennt aufgeschmolzen und die beiden Polymerschmelzströme auf eine bestimmte Temperatur gebracht, um ein optimales Vermischen unter Beibehaltung der gewünschten Eigenschaften zu erreichen.

Aus der EP-A 0 340 655 ist darüber hinaus ein Verfahren bekannt, bei dem thermisch inkompatible Polymere miteinander vermischt werden können. Auch hier werden die einzelnen Polymerströme zunächst in separaten Extrudern auf ein vorbestimmtes Temperatumiveau gebracht, um anschließend vermischt zu werden. Polymere werden als thermisch unverträglich definiert, wenn zwischen ihren thermischen Verarbeitungsfenstern ein nicht abgedeckter Temperaturbereich von mehr als 5°C liegt.

Im Stand der Technik werden also die Thermoplaste, aus denen das Polymerblend hergestellt wird, am Ort der Blendherstellung in fester Form angeliefert. Die der Anlieferung vorausgehende Herstellung der Thermoplaste (Primärproduktion) findet in aller Regel in räumlicher Entfernung vom Ort der Blendherstellung statt und erfolgt durch chemische Verknüpfung (beispielsweise Polymerisation, Polykondensation, Polyaddition) monomerer Bausteine. Die Anlieferung der Thermoplaste in fester Form zu dem Ort der Blendherstellung setzt voraus, dass die Thermoplaste in der Primärproduktionsstätte durch Abkühlen erstarrt und anschließend gegebenenfalls granuliert werden. Aus dieser allgemeinen üblichen Vorgehensweise ergeben sich folgende Nachteile:

Die beschriebene Schritte Abkühlen, Erstarrung, Granulierung, Lagerung, Transport und Aufschmelzen verursachen Kosten und einen logistischen Aufwand. Gleichzeitig führt der benötigte Energieverbrauch zu einer Belastung der Umwelt. Das Aufschmelzen der Blendkomponenten im Compoundierbetrieb stellt weiterhin eine zusätzliche thermische Belastung der Thermoplaste dar, die zu einer Schädigung und damit schlechteren Blendeigenschaften führen können. Dies gilt insbesondere für temperaturempfindliche Polymere. Schließlich kann sich am Ort der Blendherstellung vor dem Aufschmelzen eine Trocknung der eingesetzten Thermoplaste als notwendig erweisen, wenn bei Transport und Lagerung aufgenommene Feuchtigkeit zu Polymerabbau der Thermoplaste in der Schmelze rühren würde. Des weiteren sind die vorgenannten bekannten Verfahren zum Herstellen eines thermoplastischen Polymerblends konstruktiv aufwendig, da die einzelnen Produktströme nach Aufschmelzen zunächst auf ein bestimmtes Temperaturniveau gebracht werden müssen, um optimal miteinander vermischt werden zu können.

Der Erfindung liegt daher die Aufgabe zugrunde, ein Verfahren und eine Vorrichtung zum Herstellen eines thermoplastischen Polymerblends aus Polycarbonat und mindestens einem thermoplastischen Polyester und/oder elastomeren Polymerisaten sowie ggf. weiteren Zusätzen anzugeben, bei dem auf die beschriebenen Erstarrungs-, Granulier-, Transport-, Trocknungs- und Aufschmelzschritte für mindestens einen Thermoplasten verzichtet werden kann.

Diese Aufgabe wird verfahrensmäßig durch die folgenden Schritte gelöst:

- Entnahme mindestens eines zur Herstellung des Polymerblends verwendeten Thermoplasten bevorzugt Polycarbonat oder Polybutylenterephthalat, besonders bevorzugt aromatisches Polycarbonat in geschmolzenem Zustand direkt aus der Primärproduktion,
- gegebenenfalls Aufschmelzen der zuzumischenden Blendkomponenten,
- Zufügen der zuzumischenden Blendkomponenten zu der der Primärproduktion entnommenen Thermoplastschmelze,
- Mischen aller Komponenten in einer Mischstrecke und
- Abkühlen und gegebenenfalls Granulieren der Polymerschmelze.

Die erfindungsgemäß hergestellte Polymerschmelze eignet sich insbesondere zur Herstellung von Halbzeugen, wie beispielsweise Folien, Massivplatten, Stegdoppelplatten, Profile oder Rohre.

Im Falle der bevorzugten Entnahme von Polycarbonat aus der Primärproduktion besteht die Lösung der Aufgabe vorrichtungsgemäß aus einer Anlage im wesentlichen bestehend aus einem in einem ersten Abscheider angeordneten Rohrverdampfer, einem in einem zweiten Abscheider angeordneten Strangverdampfer, mindestens einem Extruder zum Aufschmelzen der Blendkomponenten, mindestens einem Mischer, vorzugsweise einem statischen Mischer, und gegebenenfalls einer Vorrichtung zum Granulieren des Polymerblends, wobei die einzelnen Komponenten durch Rohrleitungen miteinander verbunden sind.

In weiterer Ausgestaltung der Erfindung wird schmelzflüssiges Polycarbonat aus der Primärproduktion verwendet, wobei die Temperatur des Polycarbonats vor Zufügen der zuzumischenden Blendkomponenten 220 bis 320°C, bevorzugt 270 bis 300°C, besonders bevorzugt 280 bis 290°C beträgt.

Da bei manchen Herstellungsverfahren die Temperatur der Polycarbonatschmelze bis 350°C beträgt, ist ein Beimischen temperaturempfindlicher Blendkomponenten bei dieser Temperatur ohne Schädigung der zuzumischenden Blendkomponenten nicht möglich. Doch es ist bei der erfindungsgemäßen Vorrichtung, deren Aufbau weiter unten noch näher beschrieben wird, möglich, die aufgeschmolzenen Blendkomponenten unmittelbar in die Polycarbonatschmelze einzumischen. Dies führt zu einer deutlichen Verbesserung des Verfahrens, da auf die weiter oben beschriebenen Schritte (Erstarrung, Granulierung, Lagerung, Transport, Trocknung, Aufschmelzung) sowie auf entsprechende Temperierungskomponenten verzichtet werden kann, so dass einerseits der konstruktive Aufwand, auch für die Steuerung und Regelung, und andererseits auch die Baugröße der Anlage und damit deren Kosten minimiert werden können. Gleichfalls lässt sich die Umweltbelastung reduzieren. Schließlich ist es möglich, ohne Variierung der Temperaturen eine herkömmliche Anlage zur Polycarbonatherstellung auch zur Herstellung des gewünschten Polymerblends aus Polycarbonat und wenigstens einem Blendpartner zu nutzen.

In einer alternativen Ausgestaltung der Erfindung handelt es sich bei dem Thermoplasten, der der Primärproduktion in geschmolzenem Zustand entnommen wird um thermoplastische Polyester, bevorzugt Polybutylenterephthalat, Polytrimethylenterephthalat oder Polyethylenterephthalat, besonders bevorzugt Polybutylenterephthalat. Die Temperatur der Polybutylenterephthalat-Schmelze beträgt 220 bis 320°C bevorzugt 230 bis 300°C, besonders bevorzugt 240 bis 280°C beim Zufügen der anderen Blendkomponenten.

Ein bevorzugt herzustellendes Polymerblend enthält

A: 2 bis 98 Gew.-Teile thermoplastische Polyester, bevorzugt in Summe 10 bis 60 Gew.-Teile Polybutylenterephthalat, Polytrimethylenterephthalat und/oder Polyethylenterephthalat, besonders bevorzugt 10 bis 60 Gew-Teile Polybutylenterephthalat, insbesondere bevorzugt 30 bis 50 Gew.-Teile Polybuthylenterephthalat

B: 2 bis 98 Gew.-Teile aromatisches Polycarbonat, bevorzugt 40 bis 90 Gew.-Teile aromatisches Polycarbonat,

C: 0 bis 30 Gew.-Teile Pfropfpolymerisat, bevorzugt 4 bis 25 Gew.-Teile Pfropfpolymerisat,

D: 0 bis 25 Gew.-Teile Additive, bevorzugt 0,05 bis 20 Gew.-Teilen Additive, besonders bevorzugt 0,1 bis 10 Gew.-Teile Additive, wobei die Summe aller Gewichtsteile der Komponenten A - D 100 ergibt.

Ein weiteres bevorzugt herzustellendes Polymerblend enthält

A: 2 bis 98 Gew.-Teile thermoplastische Polyester, bevorzugt in Summe 10 bis 60 Gew.-Teile Polybutylenterephthalat, Polytrimethylenterephthalat und/oder Polyethylenterephthalat, besonders bevorzugt 10 bis 60 Gew-Teile Polybutylenterephthalat, insbesondere bevorzugt 30 bis 50 Gew.-Teile Polybutylenterephthalat

B: 2 bis 98 Gew.-Teile aromatisches Polycarbonat, bevorzugt 40 bis 90 Gew.-Teile aromatisches Polycarbonat,

C: 0 bis 30 Gew.-Teile Pfropfpolymerisat, bevorzugt 4 bis 25 Gew.-Teile Pfropfpolymerisat,

D: 0 bis 30 Gew.-Teile thermoplastisches Vinyl-copolymerisat, bevorzugt 4 bis 25 Gew.-Teile thermoplastisches Vinylcopolymerisat,

E: 0 bis 25 Gew.-Teile Additive, bevorzugt 0,05 bis 20 Gew.-Teilen Additive, besonders bevorzugt 0,1 bis 10 Gew.-Teile Additive, wobei die Summe aller Gewichtsteile der Komponenten A - E 100 ergibt.

Ein weiteres bevorzugt herzustellendes Polymerblend enthält:

A: 40 bis 99 Gew.-Teile aromatisches Polycarbonat, bevorzugt 60 bis 98 Gew.-Teile aromatisches Polycarbonat,

B: 0 bis 60 Gew.-Teile Pfropfpolymerisat, bevorzugt 1 bis 40 Gew.-Teile Pfropfpolymerisat, besonders bevorzugt

2 bis 25 Gew.-Teile Pfropfpolymerisat

C: 0 bis 45 Gew.-Teile thermoplastisches Vinyl-copolymerisat, bevorzugt 0 bis 30 Gew.-Teile thermoplastische Vinyl-copolymerisat , besonders bevorzugt 2 bis 25 Gew.-Teile thermoplastische Vinyl-copolymerisat,

D: 0 bis 30 Gew.-Teile Additive, bevorzugt 0,05 bis 25 Gew.-Teilen Additive, besonders bevorzugt 0,1 bis 17 Gew. -Teile Additive, wobei die Summe aller Gewichtsteile der Komponenten A - D 100 beträgt.

Aromatische Polycarbonate werden im folgenden beschrieben:

Erfindungsgemäß kann jedes Polycarbonat eingesetzt werden. Erfindungsgemäß geeignete Polycarbonate sind sowohl Homopolycarbonate als auch Copolycarbonate. Auch eine Mischung der erfindungsgemäß geeigneten Polycarbonate kann verwendet werden. Die Polycarbonate können teilweise oder vollständig durch aromatische Polyestercarbonate ersetzt werden.

Bevorzugte Polycarbonate sind solche Homopolycarbonate und Copolycarbonate auf Basis der Bisphenole der allgemeinen Formel (I),

$$HO\text{-}Z\text{-}OH \qquad (I)$$

worin

Z ein divalenter organischen Rest mit 6 bis 30 C-Atomen ist, der eine oder mehrere aromatische Gruppen enthält.

Beispiele für Bisphenole gemäß der allgemeinen Formel (I) sind Bisphenole, die zu den folgenden Gruppen gehören:

Dihydroxydiphenyle,
Bis-(hydroxyphenyl)-alkane,
Bis-(hydroxyphenyl)-cycloalkane,
Indanbisphenole
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide und
$\alpha,\alpha'$-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen:

Hydrochinon,
Resorcin,
4,4'-Dihydroxydiphenyl,
Bis-(4-hydroxyphenyl)sulfid,
Bis-(4-hydroxyphenyl)sulfon,
Bis-(3,5-dimethyl-4-hydroxyphenyl)-methan,
Bis-(3,5-dimethyl-4-hydroxyphenyl)-sulfon,
1,1-Bis-(3,5-dimethyl-4-hydroxyphenyl)-p/m-diisopropylbenzol,
1,1-Bis-(4-hydroxyphenyl)-1-phenyl-ethan,
1,1-Bis-(3,5-dimethyl-4-hydroxyphenyl)-cyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methylcyclohexan.
1,1-Bis-(4-hydroxyphenyl)-cyclohexan,
1,1-Bis-(4-hydroxyphenyl)-3,3,5-trimethylcyclohexan,
2,2-Bis-(3,5-dichlor-4-hydroxyphenyl)-propan,

2,2-Bis-(3-methyl-4-hydroxyphenyl)-propan,
2,2-Bis-(3,5-dimethyl-4-hydroxyphenyl)-propan,
2,2-Bis-(4-hydroxyphenyl)-propan (d.h. Bisphenol A),
2,2-Bis-(3-chlor-4-hydroxyphenyl)-propan,
2,2-Bis-(3,5-dibrom-4-hydroxyphenyl)-propan,
2,4-Bis-(4-hydroxyphenyl)-2-methylbutan,
2,4-Bis-(3,5-dimethyl-4-hydroxyphenyl)-2-methylbutan,
α,α'-Bis-(4-hydroxyphenyl)-o-diisopropylbenzol,
α,α'-Bis-(4-hydroxyphenyl)-m-diisopropylbenzol (d. h. Bisphenol M),
α,α'-Bis-(4-hydroxyphenyl)-p-diisopropylbenzol und
Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physis of Polycarbonates", Polymer Reviews, Band 9, S. 77-98, Interscience Publishers, New York, London, Sidney, 1964 und in US-A 3 028 635, in US-A 3 062 781, in den US-A 2 999 835, in US-A 3 148 172, in US-A 2 991 273, in US-A 3 271 367, in US-A 4 982 014, in USA 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern 62039/1986, 62040/1986 und 105550/1986.

1,1-Bis-(4-hydroxyphenyl)-3,3,5-trimethylcyclohexan und seine Herstellung ist z.B. beschrieben in den US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512, in US-A 3 022 272, in US-A 5 340 905 und in US-A 5 399 659.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Bei der Herstellung von Polycarbonaten nach dem Schmelzeumesterungsverfahren kann die Reaktion des Bisphenols und des Kohlensäurediesters kontinuierlich oder diskontinuierlich beispielsweise in Rührkesseln, Dünnschichtverdampfem, Fallfilmverdampfern, Rührkesselkaskaden, Extrudern, Knetem, einfachen Scheibenreaktoren und Hochviskosscheibenreaktoren durchgeführt werden.

Kohlensäurediester, die zur Herstellung von Polycarbonaten eingesetzt werden können, sind zum Beispiel Diarylester der Kohlensäure, wobei die beiden Arylreste bevorzugt jeweils 6 bis 14 C-Atome haben. Vorzugsweise werden die Diester der Kohlensäure auf der Basis von Phenol oder alkylsubstituierten Phenolen, also zum Beispiel Diphenylcarbonat oder Dikresylcarbonat, eingesetzt. Bezogen auf 1 Mol Bisphenol werden die Kohlensäurediester bevorzugt in einer Menge von 1,01 bis 1,30 Mol, besonders bevorzugt in einer Menge von 1,02 bis 1,15 Mol eingesetzt.

Die erfindungsgemäß geeigneten Polycarbonate haben bevorzugt ein Gewichtsmittel der molaren Masse ($\overline{M}_W$), welches sich beispielsweise durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechem beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[ 4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und $\alpha,\alpha',\alpha''$-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechem in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Beispiele dafür sind die durch die allgemeinen Formeln (Va) und (Vb) gegeben:

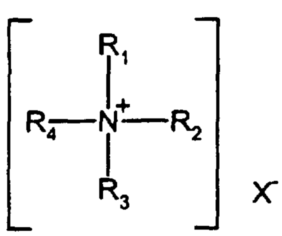 (Va) 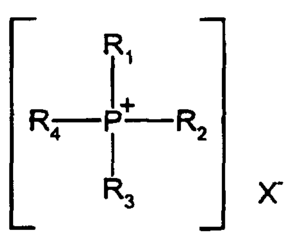 (Vb)

worin

$R_1$ bis $R_4$ unabhängig voneinander $C_1$-$C_{16}$-Alkyle/Aryle oder Cycloalkyle sein können und X- ein Anion ist, bei dem das korrespondierende Säure-Base-Paar $H^+ + X^- \Leftrightarrow HX$ einen $pK_B$-Wert von kleiner als 11 besitzt.

Geeignete Ammoniumsalze bzw. Phosphoniumsalze sind beispielsweise

Tetramethylammoniumtetraphenylboranat,
Tetraphenylphosphoniumphenolat,
Tetraphenylphosphoniumfluorid,
Tetraphenylphosphoniumtetraphenylboranat,
Dimethyldiphenylammoniumhydroxid,
Tetraethylammoniumhydroxid,
Tetramethylammoniumhydroxid,
Tetramethylammoniumacetat und
Tetramethylammoniumfluorid.

Bevorzugt einzusetzende Katalysatoren sind auch Guanidine gemäß US-A 5 319 066, geeignet sind aber auch Imidazole.

Die Katalysatoren werden bevorzugt in Mengen von $10^{-8}$ bis $10^{-4}$ mol, besonders bevorzugt in einer Konzentration von $10^{-7}$ bis $10^{-5}$ mol bezogen auf 1 mol Bisphenol eingesetzt.

Die Katalysatoren können allein oder in Kombination miteinander eingesetzt werden; sie können zu Beginn des Verfahrens oder erst im Verlauf des Verfahrens zugesetzt werden.

Im Falle der Verwendung von Katalysatorkombinationen können auch Alkali- oder Erdalkali-Verbindungen bzw. -Salze mitverwendet werden, und zwar im Verlauf des Verfahrens, also in der Polykondensationsphase, wie dies im bereits zitierten US-A 5 399 659 dargelegt ist.

Thermoplastische Polyester werden im folgenden beschrieben: Als thermoplastsiche Polyester werden bevorzugt Polyalkylenterephthalate eingesetzt. Die Polyalkylenterephthalate sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol-, Butandiol-1,4- und/oder Propandiol-1,3-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol-, Propandiol-1,3- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestem) und Ethylenglykol, Propandiol-1,3 und/oder Butandiol-1,4 hergestellt worden sind, und Mischungen dieser Polyalkylenterephthalate. Besonders bevorzugt sind also Polybutylenterephthalat, Polytrimethylenterephthalat und Polyethylenterephthalat und Mischungen dieser Polyalkylenterephthalate. Ganz besonders bevorzugt ist Polybutylenterephthalat.

Bevorzugt enthalten Mischungen von Polyalkylenterephthalaten 1 bis 50 Gew.-%, vorzugsweise 1 bis 30 Gew.-% Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Pfropfpolymerisate und thermoplastische Vinylcopolymerisate stellen gemeinsam die Gruppe der Vinylpolymerisate dar.

Pfropfpolymerisate werden im folgenden beschrieben: Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis

18 C-Atomen in der Alkoholkomponente; also Polymerisate, wie sie z.B. in Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind. Bevorzugte Polymerisate C sind partiell vernetzt und besitzen Gelgehalte von über 20 Gew.-%, vorzugsweise über 40 Gew.-%, insbesondere über 60 Gew.-%.

Bevorzugte Pfropfpolymerisate C umfassen Pfropfpolymerisate aus:

C.1 5 bis 95, vorzugsweise 30 bis 80 Gew.-Teile, einer Mischung aus

C.1.1 50 bis 99 Gew.-Teilen Styrol, α-Methylstyrol, halogen- oder methylkernsubstituierten Styrolen, Methylmethacrylat oder Mischungen dieser Verbindungen und

C.1.2 1 bis 50 Gew.-Teilen Acrylnitril, Methacrylnitril, Methylmethacrylat, Maleinsäureanhydrid, $C_1$-$C_4$-alkyl- bzw. phenyl-N-substituierten Maleinimiden oder Mischungen dieser Verbindungen auf

C.2 5 bis 95, vorzugsweise 20 bis 70 Gew.-Teilen Polymerisat auf Dien- und/oder Alkylacrylat-Basis mit einer Glasübergangstemperatur unter -10°C,

Bevorzugte Pfropfpolymerisate C sind z.B. mit Styrol und/oder Acrylnitril und/oder (Meth)-Acrylsäurealkylestern gepfropfte Grundlagen C.2 wie Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate C sind z.B. ABS-Polymerisate, wie sie z.B. in der DE-OS 2 035 390 (= US-PS 3 644 574) oder in der DE-OS 2 248 242 (= GB-PS 1 409 275) beschrieben sind.

Besonders bevorzugte Pfropfpolymerisate C sind erhältlich durch Pfropfreaktion von

α 10 bis 70, vorzugsweise 15 bis 50, insbesondere 20 bis 40 Gew.-%, bezogen auf Pfropfpolymisat C, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol, als Pfropfauflage C.1 auf

β 30 bis 90, vorzugsweise 50 bis 85, insbesondere 60 bis 80 Gew.-%, bezogen auf Pfropfpolymerisat C, eines Butadienpolymerisats mit mindestens 50 Gew.-%, bezogen auf β, Butadienresten als Pfropfgrundlage C.2.

Der Gelanteil der Pfropfgrundlage β beträgt im allgemeinen mindestens 20 Gew.-%, vorzugsweise 40 Gew.-% (in Toluol gemessen), der Pfropfgrad G 0,15 bis 0,55 und der mittlere Teilchendurchmesser $d_{50}$ des Pfropfpolymerisats C.2 0,05 bis 2 μm, vorzugsweise 0,1 bis 0,6 μm.

(Meth)-Acrylsäureester α sind Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Der Pfropfgrad G bezeichnet das Gewichtsverhältnis von aufgepfropften Pfropfinonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate C sind z.B. auch Pfropfpolymerisate aus

τ. 20 bis 90 Gew.-%, bezogen auf Komponente C, Acrylatkautschuk mit einer Glasübergangstemperatur <-20°C als Pfropfgrundlage C.2 und

δ. 10 bis 80 Gew.-%, bezogen auf Komponente C, mindestens eines polymerisierbaren, ethylenisch ungesättigten Monomeren als Pfropfmonomere C.1.

Die Acrylatkautschuke τ der Polymerisate C sind vorzugsweise Polymerisate aus Acrylsäurealkylestem, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vemetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinylund Triallylcyanurat; polyfunktionelle Vinylverbindungen, wie Di- und Trivinylbenzole; aber auch Triallylphosphat und Diallylphthalat.

Bevorzugt vemetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vemetzende Monomere sind die cyclischen Monomere Triallylcyanurat, Triallylisocyanurat, Trivinylcyanurat, Triacryloylhexahydro-s-triazin, Triallylbenzole.

Die Menge der vemetzenden Monomere beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugt "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in DE-OS 3 704 657, DE-OS 3 704 655, DE-OS 3 631 540 und DE-OS 3 631 539 beschrieben werden.

Der Gelgehalt der Pfropfgrundlage C.2 wird bei 25°C in Dimethylformamid bestimmt (M. Hoffmann, H. Krömer, R. Kuhn, Polymeranalytik I und II, Georg-Thieme-Verlag, Stuttgart 1977).

Die Pfropfpolymerisate C können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomere in Gegenwart der Pfropfgrundlage gewonnen werden.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Thermoplastische Vinylcopolymerisate werden im folgenden beschrieben: Geeignet sind als Vinyl(co)Polymerisate D.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

D.1.1 50 bis 99, vorzugsweise 60 bis 80 Gew.-Teilen Vinylaromaten und/oder kemsubstituierten Vinylaromaten wie beispielsweise Styrol, α-Methylstyrol, p-Methylstyrol, p-Chlorstyrol) und/oder Methacrylsäure-($C_1$-$C_8$)-Alkylester wie z.B. Methylmethacrylat, Ethylmethacrylat), und

D.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate D.1 sind harzartig, thermoplastisch und kautschukfrei.

Besonders bevorzugt ist das Copolymerisat aus D.1.1 Styrol und D.1.2 Acrylnitril.

Die (Co)Polymerisate gemäß D.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte $\overline{M}_w$ (Gewichtsmittel, ermittelt durch Lichtstreuung oder Sedimentation) zwischen 15 000 und 200 000.

Die thermoplastischen Vinyl(co)polymerisate D und die Pfropfpolymerisate C können bei ihrer Herstellung als Gemisch anfallen und als solches im erfindungsgemäßen Verfahren eingesetzt werden.

Additive werden wie folgt beschrieben: Übliche Additive sind z.B.: Füllstoffe (z. B. mineralische Füllstoffe),

Verstärkungsstoffe (z. B. Glasfasern), Stabilisatoren (zum Beispiel UV-Stabilisatoren, Thermostabilisatoren, Gammastrahlenstabilisatoren), Antistatika, Fließhilfsmittel, Entformungsmittel, Brandschutzadditive, Emulgatoren, Nukleierungsmittel, Weichmacher, Gleitmittel, Farbstoffe und Pigmente. Die genannten und weitere geeignete Additive sind zum Beispiel beschrieben in Gächter, Müller, Kunststoff-Additive, 3. Ausgabe, Hanser-Verlag, München, Wien, 1989. Die Additive können alleine oder in Mischung bzw. in Form von Masterbatchen eingesetzt werden.

Als faser- oder teilchenförmige Füllstoffe und Verstärkungsstoffe können z.B. Glasfasern, Glaskugeln, Glasgewebe, Glasmatten, Kohlenstofffasern, Aramidfasern, Kaliumtitanat-Fasern, Naturfasern, amorphe Kieselsäure, Magnesiumcarbonat, Bariumsulfat, Feldspat, Glimmer, Silikate, Quarz, Talkum, Kaolin, Titandioxid, Wollastonit, u.a. zugesetzt werden, die auch oberflächenbehandelt sein können. Bevorzugte Verstärkungsstoffe sind Talkum und Kaolin, besonders bevorzugt Glasfasern. Die Füllstoffe und Verstärkungsstoffe können mit einem geeigneten Schlichtesystem und einem Haftvermittler bzw. Haftvermittlersystem z.B. auf Silanbasis ausgerüstet sein können.

Als Flammschutzmittel können handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-OS 4 236 122) können eingesetzt werden. Als halogenhaltige, insbesondere bromierte und chlorierte Verbindungen seien beispielhaft und vorzugsweise genannt: Ethylen-1,2-bistetrabromphthalimid, epoxidiertes Tetrabrombisphenol A-Harz, Tetrabrombisphenol-A-oligocarbonat, Tetrachlorbisphenol-Aoligocarbonat, Pentabrompolyacrylat, bromiertes Polystyrol. Als organische Phosphorverbindungen sind die Phosphorverbindungen gemäß WO98/17720 (PCT/EP/05705) geeignet, bevorzugt sind Triphenylphosphat (TPP), Resorcinol-bis-(diphenylphosphat) einschließlich Oligomere (RDP) sowie Bisphenol-A-bis-diphenylphosphat einschließlich Oligomere (BDP), Melaminphosphat, Melaminpyrophosphat, Melaminpolyphosphat und deren Mischungen. Als Stickstoffverbindungen kommen insbesondere Melamin und Melamincyanurat in Frage. Als Synergisten sind z.B. Antimonverbindungen, insbesondere Antimontrioxid und Antimonpentoxid, nanoskalige Mineralien wie z.B. Bariumsulfat, Zinkverbindungen, Zinnverbindungen wie z.B. Zinnstannat und Borate geeignet. Kohlenstoffbildner und Tetrafluorethylenpolymerisate können zugesetzt werden.

Als Stabilisatoren können beispielsweise sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Pigmente können beispielsweise Titandioxid, Ultramarinblau, Eisenoxid, Ruß, Phthalocyanine, Chinacridone, Perylene, Nigrosin und Anthrachinone eingesetzt werden.

Als Nukleierungsmittel können beispielsweise Natriumphenylphosphinat, Aluminiumoxid, Siliziumdioxid sowie bevorzugt Talkum eingesetzt werden.

Als Gleit- und Entformungsmittel können Esterwachse, Penteritrytstearat (PETS), langkettige Fettsäuren (z. B. Stearinsäure oder Behensäure), deren Salze (z.B. Caoder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können beispielsweise Phthalsäuredioctylester, Phthalsäuredibenzylester, Phthalsäurebutylbenzylester, Kohlenwasserstofföle, N-(n-Butyl)benzolsulfonamid eingesetzt werden.

Bevorzugt ist die Verwendung der nach den dargestellten Verfahren hergestellten Polymerschmelze zur Herstellung von Granulat oder Halbzeugen, wie beispielsweise Folien, Massivplatten, Stegdoppelplatten, Profile oder Rohre.

Nach einer bevorzugten Lehre der Erfindung erfolgt die Förderung des Produktstromes mittels großmäuligen Zahnradpumpen. Dabei sind alle produktführenden Teile der einzelnen Komponenten beheizt ausgeführt, die mit dem Produkt in Berührung tretenden Elemente mit eisenarmen Werkstoffen ausgekleidet. Als eisenarme Werkstoffe werden bevorzugt Alloy 59 (2.4605), Inconell 686 (2.4606), Alloy-B2, Alloy C22, Alloy-C276, Alloy-C4, Alloy B2, Alloy B3 oder Alloy B4 eingesetzt.

Eine weitere Ausgestaltung der Erfindung sieht vor, dass als Extruder zum Aufschmelzen der Blendkomponenten ein Gegendrallextruder oder ein Gleichdrallextruder vorgesehen ist. Besonders gute Ergebnisse wurden dadurch erzielt, dass als Mischer zum Vermischen der Komponenten ein statischer Mischer vorgesehen ist. Dabei beträgt das Verhältnis von Mischlänge L zu Mischdurchmesser D des statischen Mischers bevorzugt L:D = 14:1.

Die Erfindung wird nachfolgend anhand einer lediglich ein bevorzugtes Ausführungsbeispiel darstellenden Zeichnung, bei dem Polycarbonat der Primärproduktion in geschmolzenem Zustand entnommen wird, näher erläutert.

In der einzigen Figur ist schematisch eine Anlage zur Direktcompoundierung eines Blends aus Polycarbonat, Pfropfpolymerisat, Vinylcopolymer und Additiven (sogenanntes Bayblend® ) bzw. Polycarbonat, Polybutylenterephthalat, Pfropfpolymerisat und Additiven (sogenanntes Pocan® ) dargestellt.

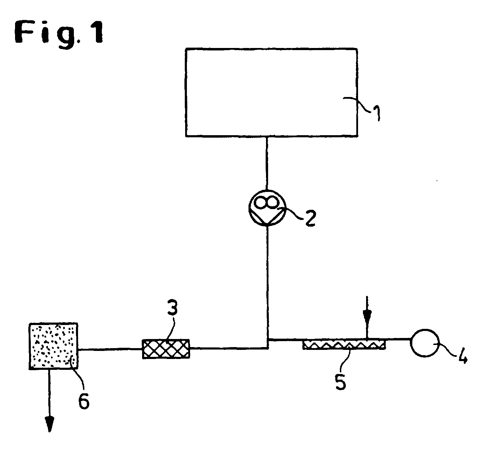

Im nur schematisch dargestellten Ausführungsbeispiel (Fig. 1) fördert eine großmäulige Zahnradpumpe 2 Polycarbonatschmelze, die direkt aus einer nicht näher gezeigten Anlage 1 zur Herstellung von Polycarbonat stammt, über eine statische Mischstrecke 3, über die ein Produktseitenstrom aus einem von einem Motor 4 angetriebenen

Extruder 5 zum Einmischen der zuzumischenden Blendkomponenten (Pfropfpolymere, Vinyl-copolymere und Additive im Falle von Bayblend® bzw. Polybutylenterephthalat, Pfropfpolymere und Additive im Falle von Pocan®) eingemischt wird und über eine nicht näher bezeichnete Düsenplatte einer Granulierung 6 zu.

Zum Aufschmelzen der zuzumischenden Blendkomponenten können auch mehrere Extruder verwendet werden. Die zuzumischenden Blendkomponenten können teilweise auch zwischen der Mischstrecke 3 und dem Extruder 5 direkt dem Schmelzestrom zugemischt werden. Bei dem Versuchsaufbau wurden Rohrleitungen und Austragspumpen mit Wärmeträgeröl beheizt. Die Rohrleitungen sind dabei aus Inconel 686 gefertigt.

Die Analysenwerte der mit der beschriebenen Anlage hergestellten Polymerblends - produzierte Menge ca. 10 Tonnen - liegen innerhalb der gewünschten Spezifikation entsprechender Blends, hergstellt auf klassischem Weg. Insbesondere im Falle von Pocan® entsprechen die mechanischen Eigenschaften, insbesondere die Tieftemperaturzähigkeit der so hergestellten Formmassen vollständig denen der entsprechenden Polymerblends hergestellt auf klassischem Weg.

Die Volumenströme betrugen 330 kg/h Polycarbonatschmelze, dem über die statische Mischstrecke 3 140 kg/h zuzumischende Blendkomponenten im Falle von Bayblend® und 83 kg/h zuzumischende Polymerkomponenten im Falle von Pocan® online zugemischt wurde. Die mit der erfindungsgemäßen Anlage hergestellte Polymerblends weisen einen Restgehalt an Monochlorbenzol von 480 ppm auf.

**Patentansprüche**

1. Verfahren zum Herstellen eines thermoplastischen Polymerblends aus Polycarbonat, einem thermoplastischen Polyester und/oder Vinylpolymerisaten sowie ggf. weiteren Zusätzen **gekennzeichnet durch** die folgenden Schritte:

   - Entnahme mindestens eines zur Herstellung des Polymerblends verwendeten Thermoplasten in geschmolzenem Zustand direkt aus der Primärproduktion,
   - gegebenenfalls Aufschmelzen der zuzumischenden Blendkomponenten,
   - Zufügen der zuzumischenden Blendkomponenten zu der der Primärproduktion entnommenen Polymerschmelze,
   - Mischen aller Komponenten in einer Mischstrecke und
   - Abkühlen und gegebenenfalls Granulieren der Polymerschmelze.

2. Verfahren nach Anspruch 1, **dadurch gekennzeichnet, dass** als thermoplastischer Polyester Polyalkylenterephthalate, bevorzugt Polybutylenterephthalat, Polytrimethylenterephthalat und/oder Polyetylenterephthalat, besonders bevorzugt Polybutylenterephtalat (PBT) verwendet werden.

3. Verfahren nach Anspruch 1 oder 2, **dadurch gekennzeichnet, dass** es sich bei dem Thermoplasten, der der Primärproduktion im geschmolzenen Zustand entnommen wird, um thermoplastische Polyester, bevorzugt Polybuthylenterephthalat, Polytrimethylenterephthalat oder Polyethylenterephthalat, besonders bevorzugt Polybutylenterephthalat handelt.

4. Verfahren nach Anspruch 1 oder 2, **dadurch gekennzeichnet, dass** es sich bei dem Thermoplasten, der der Primärproduktion in geschmolzenem Zustand entnommen wird, um aromatisches Polycarbonat handelt.

5. Verfahren nach Anspruch 4, **dadurch gekennzeichnet, dass** die Temperatur des geschmolzenen Polycarbonats 260 bis 320°C, bevorzugt 270 bis 300°C, besonders bevorzugt 280 bis 290°C beträgt.

6. Verfahren nach einem der Ansprüche 2 bis 5, **dadurch gekennzeichnet, dass** Polybutylenterephthalat aus der Primärproduktion in geschmolzenem Zustand entnommen wird und die Temperatur des geschmolzenen Polybuthylenterephthalats 220 bis 320°C, bevorzugt 230 bis 300°C, besonders bevorzugt 240 bis 280°C beträgt

7. Verfahren nach einem der Ansprüche 1 bis 6, **dadurch gekennzeichnet, dass** thermoplastische Formmassen hergestellt werden, die

   A: 2 bis 98 Gew.-Teile thermoplastische Polyester, besonders bevorzugt 30 bis 50 Gew.-Teile thermoplastische Polyester, bevorzugt in Summe 10 bis 60 Gew.-Teile Polybutylenterephthalat, Polytrimethylenterephthalat und/oder Polyethylenterephthalat, besonders bevorzugt 10 bis 60 Gew.-Teile Polybutylenterephthalat,

B: 2 bis 98 Gew.-Teile aromatisches Polycarbonat, bevorzugt 40 bis 90 Gew.-Teile aromatisches Polycarbonat,

C: 0 bis 30 Gew.-Teile Pfropfpolymerisat, bevorzugt 4 bis 25 Gew.-Teile Pfropfpolymerisat,

D: 0 bis 25 Gew.-Teile Additive, bevorzugt 0,05 bis 20 Gew.-Teilen Additive, besonders bevorzugt 0,1 bis 10 Gew.-Teile Additive

enthalten, wobei die Summe aller Gewichtsteile der Komponenten A - D 100 ergibt.

**8.** Verfahren nach einem der Ansprüche 1 bis 6, **dadurch gekennzeichnet, dass** thermoplastische Formmassen hergestellt werden, die

A: 2 bis 98 Gew.-Teile thermoplastische Polyester, bevorzugt in Summe 10 bis 60 Gew.-Teile Polybutylenterephthalat, Polytrimethylenterephthalat und/oder Polyethylenterephthalat, besonders bevorzugt 10 bis 60 Gew. -Teile Polybutylenterephthalat,

B: 2 bis 98 Gew.-Teile aromatisches Polycarbonat, bevorzugt 40 bis 90 Gew.-Teile aromatisches Polycarbonat,

C: 0 bis 30 Gew.-Teile Pfropfpolymerisat, bevorzugt 4 bis 25 Gew.-Teile Pfropfpolymerisat,

D: 0 bis 30 Gew.-Teile thermoplastische Vinyl-copolymerisat, bevorzugt 4 bis 25 Gew.-Teile thermoplastische Vinyl-copolymerisat,

E: 0 bis 25 Gew.-Teile Additive, bevorzugt 0,05 bis 20 Gew.-Teilen Additive, besonders bevorzugt 0,1 bis 10 Gew.-Teile Additive

enthalten, wobei die Summe aller Gewichtsteile der Komponenten A - E 100 entspricht.

**9.** Verfahren nach einem der Ansprüche 1 bis 6, **dadurch gekennzeichnet, dass** thermoplastische Formmassen hergestellt werden, die

A: 40 bis 99 Gew.-Teile aromatisches Polycarbonat, bevorzugt 60 bis 98 Gew.-Teile aromatisches Polycarbonat,

B: 0 bis 60 Gew.-Teile Pfropfpolymerisat, bevorzugt 1 bis 40 Gew.-Teile Pfropfpolymerisat, besonders bevorzugt 2 bis 25 Gew.-Teile Pfropfpolymerisat

C: 0 bis 45 Gew.-Teile thermoplastische Vinyl-copolymerisat, bevorzugt 0 bis 30 Gew.-Teile thermoplastische Vinyl-copolymerisat , besonders bevorzugt 2 bis 25 Gew.-Teile thermoplastische Vinyl-copolymerisat,

D: 0 bis 30 Gew.-Teile Additive, bevorzugt 0,05 bis 25 Gew.-Teilen Additive, besonders bevorzugt 0,1 bis 17 Gew.-Teile Additive

enthalten, wobei die Summe aller Gewichtsteile der Komponenten A - D 100 ergibt.

**10.** Verfahren nach einem der Ansprüche 1 bis 9, **dadurch gekennzeichnet, dass** die zuzumischenden Blendkomponenten teilweise oder vollständig physikalisch in fester Form vorgemischt werden.

**11.** Verfahren nach einem der Ansprüche 1 bis 10, **dadurch gekennzeichnet, dass** die zuzumischenden Blendkomponenten teilweise oder vollständig als Masterbatch eingesetzt werden, das heißt, zuvor in der Schmelze vermischt wurden.

**12.** Vorrichtung zum kontinuierlichen Herstellen eines thermoplastischen Polymerblendes aus Polycarbonat und einem thermoplastischen Polymer und/oder Vinylpolymerisaten sowie ggf. weiteren Zusätzen, im wesentlichen bestehend aus einer Anlage (1) zur Herstellung von Polycarbonat, wobei die Polycarbonatschmelze direkt aus dieser Anlage entnommen wird und mindestens einem Extruder (5) zum Aufschmelzen der Blendkomponenten, einem Mischer (3) und einer Vorrichtung zum Granulieren des Polymerblends, wobei die einzelnen Komponenten durch Rohrleitungen miteinander verbunden sind.

**13.** Vorrichtung nach Anspruch 12, **dadurch gekennzeichnet, dass** zur Förderung des Produktstroms großmäulige Zahnradpumpen (2) vorgesehen sind.

**14.** Vorrichtung nach einem der Ansprüche 12 oder 13, **dadurch gekennzeichnet, dass** die produktführenden Teile aller Komponenten beheizt sind.

**15.** Vorrichtung nach einem der Ansprüche 12 bis 14, **dadurch gekennzeichnet, dass** die mit dem Produktstrom in Berührung tretenden Elemente aus einem eisenarmen Werkstoff bestehen.

**16.** Vorrichtung nach Anspruch 15, **dadurch gekennzeichnet, dass** der eisenarme Werkstoff ausgewählt ist aus der Reihe: Alloy 59 (2.4605), Inconell 686 (2.4606), Alloy-B2, Alloy C22, Alloy-C276, Alloy-C4, Alloy B2, Alloy B3, Alloy B4.

**17.** Vorrichtung nach Anspruch 16, **dadurch gekennzeichnet, dass** der eisenarme Werkstoff aus Alloy 59 (2.4605) besteht.

**18.** Vorrichtung nach einem der Ansprüche 12 bis 17, **dadurch gekennzeichnet, dass** als Extruder (5) zum Aufschmelzen der Blendkomponenten ein Gegendrallextruder vorgesehen ist.

**19.** Vorrichtung nach einem der Ansprüche 12 bis 17, **dadurch gekennzeichnet, dass** als Extruder (5) zum Aufschmelzen der Blendkomponenten ein Gleichdrallextruder vorgesehen ist.

**20.** Vorrichtung nach einem der Ansprüche 12 bis 19, **dadurch gekennzeichnet, dass** als Mischer (3) zum Vermischen der Blendkomponenten ein statischer Mischer vorgesehen ist.

**21.** Vorrichtung nach Anspruch 20, **dadurch gekennzeichnet, dass** das Verhältnis von Mischlänge L zu Mischdurchmesser D des Mischers (8) L:D = 14:1 beträgt.

## Claims

**1.** Process for the production of a thermoplastic polymer blend from polycarbonate, a thermoplastic polyester and/or vinyl polymers, optionally together with further additives, **characterised by** the following steps:

- drawing at least one of the thermoplastics used for the production of the polymer blend in the molten state directly from primary production,
- optionally melting the blend components which are to be incorporated,
- adding the blend components which are to be incorporated into the polymer melt drawn from primary production,
- mixing all the components in a mixing section and
- cooling and optionally pelletising the polymer melt.

**2.** Process according to claim 1, **characterised in that** the thermoplastic polyester used comprises polyalkylene terephthalates, preferably polybutylene terephthalate, polytrimethylene terephthalate and/or polyethylene terephthalate, particularly preferably polybutylene terephthalate (PBT).

**3.** Process according to claim 1 or 2, **characterised in that** the thermoplastic which is drawn in the molten state directly from primary production comprises thermoplastic polyesters, preferably polybutylene terephthalate, polytrimethylene terephthalate or polyethylene terephthalate, particularly preferably polybutylene terephthalate.

**4.** Process according to claim 1 or 2, **characterised in that** the thermoplastic which is drawn in the molten state from primary production is aromatic polycarbonate.

**5.** Process according to claim 4, **characterised in that** the temperature of the molten polycarbonate is 260 to 320°C, preferably 270 to 300°C, particularly preferably 280 to 290°C.

**6.** Process according to any one of claims 2 to 5, **characterised in that** polybutylene terephthalate is drawn in the molten state from primary production and the temperature of the molten polybutylene terephthalate is 220 to 320°C,

preferably 230 to 300°C, particularly preferably 240 to 280°C.

**7.** Process according to any one of claims 1 to 6, **characterised in that** thermoplastic moulding compositions are produced which contain

A: 2 to 98 parts by weight of thermoplastic polyester, particularly preferably 30 to 50 parts by weight of thermoplastic polyester, preferably in total 10 to 60 parts by weight of polybutylene terephthalate, polytrimethylene terephthalate and/or polyethylene terephthalate, particularly preferably 10 to 60 parts by weight of polybutylene terephthalate,

B: 2 to 98 parts by weight of aromatic polycarbonate, preferably 40 to 90 parts by weight of aromatic polycarbonate,

C: 0 to 30 parts by weight of graft polymer, preferably 4 to 25 parts by weight of graft polymer,

D: 0 to 25 parts by weight of additives, preferably 0.05 to 20 parts by weight of additives, particularly preferably 0.1 to 10 parts by weight of additives,

wherein the sum of all parts by weight of components A-D is 100.

**8.** Process according to any one of claims 1 to 6, **characterised in that** thermoplastic moulding compositions are produced which contain

A: 2 to 98 parts by weight of thermoplastic polyester, preferably in total 10 to 60 parts by weight of polybutylene terephthalate, polytrimethylene terephthalate and/or polyethylene terephthalate, particularly preferably 10 to 60 parts by weight of polybutylene terephthalate,

B: 2 to 98 parts by weight of aromatic polycarbonate, preferably 40 to 90 parts by weight of aromatic polycarbonate,

C: 0 to 30 parts by weight of graft polymer, preferably 4 to 25 parts by weight of graft polymer,

D: 0 to 30 parts by weight of thermoplastic vinyl copolymer, preferably 4 to 25 parts by weight of thermoplastic vinyl copolymer,

E: 0 to 25 parts by weight of additives, preferably 0.05 to 20 parts by weight of additives, particularly preferably 0.1 to 10 parts by weight of additives,

wherein the sum of all parts by weight of components A-E is 100.

**9.** Process according to any one of claims 1 to 6, **characterised in that** thermoplastic moulding compositions are produced which contain

A: 40 to 99 parts by weight of aromatic polycarbonate, preferably 60 to 98 parts by weight of aromatic polycarbonate,

B: 0 to 60 parts by weight of graft polymer, preferably 1 to 40 parts by weight of graft polymer, particularly preferably 2 to 25 parts by weight of graft polymer

C: 0 to 45 parts by weight of thermoplastic vinyl copolymer, preferably 0 to 30 parts by weight of thermoplastic vinyl copolymer, particularly preferably 2 to 25 parts by weight of thermoplastic vinyl copolymer,

D: 0 to 30 parts by weight of additives, preferably 0.05 to 25 parts by weight of additives, particularly preferably 0.1 to 17 parts by weight of additives,

wherein the sum of all parts by weight of components A-D is 100.

**10.** Process according to any one of claims 1 to 9, **characterised in that** the blend components which are to be

incorporated are partially or completely physically premixed in solid form.

**11.** Process according to any one of claims 1 to 10, **characterised in that** the blend components which are to be incorporated are partially or completely used as a masterbatch, i.e. they have previously been mixed as a melt.

**12.** Apparatus for the continuous production of a thermoplastic polymer blend from polycarbonate and a thermoplastic polymer and/or vinyl polymer optionally together with further additives, substantially consisting of a plant (1) for the production of polycarbonate, wherein the polycarbonate melt is drawn directly from this plant and at least one extruder (5) for melting the blend components, a mixer (3) and an apparatus for pelletising the polymer blend, wherein the individual components are interconnected by piping.

**13.** Apparatus according to claim 12, **characterised in that** large-mouthed gear pumps (2) are provided for conveying the product stream.

**14.** Apparatus according to claim 12 or 13, **characterised in that** the product-conveying parts of all components are heated.

**15.** Apparatus according to any one of claims 12 to 14, **characterised in that** the elements which come into contact with the product stream consist of a low-iron material.

**16.** Apparatus according to claim 15, **characterised in that** the low-iron material is selected from the range: Alloy 59 (2.4605), Inconell 686 (2.4606), Alloy-B2, Alloy C22, Alloy-C276, Alloy-C4, Alloy B2, Alloy B3, Alloy B4.

**17.** Apparatus according to claim 16, **characterised in that** the low-iron material consists of Alloy 59 (2.4605).

**18.** Apparatus according to any one of claims 12 to 17, **characterised in that** a counter-rotating extruder is provided as the extruder (5) for melting the blend components.

**19.** Apparatus according to any one of claims 12 to 17, **characterised in that** a co-rotating extruder is provided as the extruder (5) for melting the blend components.

**20.** Apparatus according to any one of claims 12 to 19, **characterised in that** a static mixer is provided as the mixer (3) for mixing the blend components.

**21.** Apparatus according to claim 20, **characterised in that** the ratio of mixing length L to mixing diameter D of the mixer (3) L:D is 14:1.

## Revendications

**1.** Procédé pour la préparation d'un mélange thermoplastique de polymères consistant en un polycarbonate, un polyester thermoplastique et/ou des polymères vinyliques ainsi que, le cas échéant, d'autres additifs, **caractérisé en ce qu'**il comporte les stades opératoires suivants :

- réception d'au moins une résine thermoplastique prévue pour la préparation du mélange de polymères à l'état fondu directement de la production primaire,
- le cas échéant, fusion des composants à mélanger,
- addition des composants à mélanger au polycarbonate fondu provenant de la production primaire,
- mélange de tous les composants dans une ligne de mélange et
- refroidissement et, le cas échéant, granulation de la masse de polymères.

**2.** Procédé selon la revendication 1, **caractérisé en ce que** l'on utilise en tant que polyesters thermoplastiques des téréphtalates de polyalkylène, de préférence du téréphtalate de polybutylène, du téréphtalate de polytriméthylène et/ou du téréphtalate de polyéthylène, plus spécialement du téréphtalate de polybutylène (PBT).

**3.** Procédé selon la revendication 1 ou 2, **caractérisé en ce que** la résine thermoplastique reçue de la production primaire à l'état fondu est un polyester thermoplastique, de préférence un téréphtalate de polybutylène, un téréphtalate de polytriméthylène ou un téréphtalate de polyéthylène, plus spécialement un téréphtalate de polybutylène.

**4.** Procédé selon la revendication 1 ou 2, **caractérisé en ce que** la résine thermoplastique reçue de la production primaire à l'état fondu est un polycarbonate aromatique.

**5.** Procédé selon la revendication 4, **caractérisé en ce que** la température du polycarbonate fondu va de 260 à 320°C, de préférence de 270 à 300°C et plus spécialement de 280 à 290°C.

**6.** Procédé selon l'une des revendications 2 à 5, **caractérisé en ce que** la résine reçue à l'état fondu de la production primaire est un téréphtalate de polybutylène et **en ce que** la température du téréphtalate de polybutylène fondu va de 220 à 320°C, de préférence de 230 à 300°C et plus spécialement de 240 à 280°C;

**7.** Procédé selon l'une des revendications 1 à 6, **caractérisé en ce que** l'on prépare des matières à mouler thermoplastiques qui contiennent

A : 2 à 98 parties en poids d'un polyester thermoplastique, de préférence 30 à 50 % en poids d'un polyester thermoplastique, plus spécialement au total 10 à 60 parties en poids de téréphtalate de polybutylène, de téréphtalate de polytriméthylène et/ou de téréphtalate de polyéthylène, et plus spécialement de 10 à 60 parties en poids de téréphtalate de polybutylène,
B : 2 à 98 parties en poids d'un polycarbonate aromatique, de préférence 40 à 90 parties en poids d'un polycarbonate aromatique,
C : 0 à 30 parties en poids d'un polymère greffé, de préférence 4 à 25 parties en poids d'un polymère greffé,
D : 0 à 25 parties en poids d'additifs, de préférence 0,05 à 20 parties en poids d'additifs et plus spécialement 0,1 à 10 parties en poids d'additifs,

la somme des parties en poids des composants A à D représentant 100 parties.

**8.** Procédé selon l'une des revendications 1 à 6, **caractérisé en ce que** l'on prépare des matières à mouler thermoplastiques qui contiennent

A : 2 à 98 parties en poids d'un polyester thermoplastique, de préférence au total 10 à 60 parties en poids de téréphtalate de polybutylène, de téréphtalate de polytriméthylène et/ou de téréphtalate de polyéthylène, plus spécialement 10 à 60 parties en poids de téréphtalate de polybutylène,
B : 2 à 98 parties en poids d'un polycarbonate aromatique, de préférence 40 à 90 parties en poids d'un polycarbonate aromatique,
C : 0 à 30 parties en poids d'un polymère greffé, de préférence 4 à 25 parties en poids d'un polymère greffé,
D : 0 à 30 parties en poids d'un copolymère vinylique thermoplastique, de préférence 4 à 25 parties en poids d'un copolymère vinylique thermoplastique,
E : 0 à 25 parties en poids d'additifs, de préférence 0,05 à 20 parties en poids d'additifs et plus spécialement 0,1 à 10 parties en poids d'additifs, la somme des parties en poids des composants A à E représentant 100 parties.

**9.** Procédé selon l'une des revendications 1 à 6, **caractérisé en ce que** l'on prépare des matières à mouler thermoplastiques qui contiennent

A : 40 à 99 parties en poids d'un polycarbonate aromatique, de préférence 60 à 98 parties en poids d'un polycarbonate aromatique,
B : 0 à 60 parties en poids d'un polymère greffé, de préférence 1 à 40 parties en poids d'un polymère greffé, plus spécialement 2 à 25 parties en poids d'un polymère greffé,
C : 0 à 45 parties en poids d'un copolymère vinylique thermoplastique, de préférence 0 à 30 parties en poids d'un copolymère vinylique thermoplastique, et plus spécialement 2 à 25 parties en poids d'un copolymère vinylique thermoplastique,
D : 0 à 30 parties en poids d'additifs, de préférence 0,05 à 25 parties en poids d'additifs et plus spécialement 0,1 à 17 parties en poids d'additifs,

la somme des parties en poids des composants A à D représentant 100 parties.

**10.** Procédé selon l'une des revendications 1 à 9, **caractérisé en ce que** les composants à mélanger sont soumis à mélange préalable partiel ou total à l'état solide.

**11.** Procédé selon l'une des revendications 1 à 10, **caractérisé en ce que** les composants à mélanger sont mis en ceuvre en totalité ou en partie à l'état de mélange-maître, c'est-à-dire qu'ils ont été mélangés au préalable à l'état fondu.

**12.** Appareillage pour la préparation continue d'un mélange thermoplastique de polymères consistant en un polycarbonate et un polymère thermoplastique et/ou des polymères vinyliques avec, le cas échéant, d'autres additifs, cet appareillage consistant essentiellement en une installation (1) pour la préparation du polycarbonate, d'où le polycarbonate est reçu directement à l'état fondu, au moins une extrudeuse (5) pour fondre les composants du mélange, un mélangeur (3) et un dispositif pour la granulation du mélange de polymères, les divers composants de l'installation étant reliés entre eux par des conduits.

**13.** Appareillage selon la revendication 12, **caractérisé en ce que**, pour le transport du courant de produit, on utilise des pompes à engrenages à grande ouverture (2).

**14.** Appareillage selon l'une des revendications 12 ou 13, **caractérisé en ce que** toutes les pièces de toutes les parties constituantes en contact avec le produit sont chauffées.

**15.** Appareillage selon l'une des revendications 12 à 14, **caractérisé en ce que** les éléments en contact avec le courant de produit sont en un matériau à faible teneur en fer.

**16.** Appareillage selon la revendication 15, **caractérisé en ce que** le matériau à faible teneur en fer est choisi parmi les alliages suivants : Alloy 59 (2.4605), Inconell 686 (2.4606), Alloy-B2, Alloy C22, Alloy-C276, Alloy-C4, Alloy B2, Alloy B3 ou Alloy B4.

**17.** Appareillage selon la revendication 16, **caractérisé en ce que** le matériau à faible teneur en fer est l'alliage Alloy 59 (2.4605).

**18.** Appareillage selon l'une des revendications 12 à 17, **caractérisé en ce que**, pour la fusion des composants du mélange, on utilise une extrudeuse (5) à vis tournant en sens contraire.

**19.** Appareillage selon l'une des revendications 12 à 17, **caractérisé en ce que**, pour la fusion des composants du mélange, on utilise une extrudeuse (5) à vis tournant dans le même sens.

**20.** Appareillage selon l'une des revendications 12 à 19, **caractérisé en ce que** le mélangeur (3) servant au mélange des composants est un mélangeur statique.

**21.** Appareillage selon la revendication 20, **caractérisé en ce que** le rapport longueur de mélange L/diamètre de mélange D du mélangeur (8) est L:D = 14:1.

Fig. 1